# EUROPEAN PATENT APPLICATION

(11) **EP 4 421 058 A1**
(43) Date of publication of application: **28.08.2024**
(21) Application number: 23158717.1
(22) Date of filing: 27.02.2023
(51) Int. Cl.: C05D 5/00, C05D 9/02, C05G 3/80, C05G 5/30, B01D 53/62, C01B 32/60, C01F 5/24, C01F 11/18

(54) **PREPARATION OF MAGNESIUM CARBONATE SOIL AMENDMENT USING BENTONITE CLAY AS AN ACTIVATOR FOR MINERALIZATION OF CARBON DIOXIDE**

(71) Applicant: Sabic Agri-Nutrients Company, 31961 Jubail Industrial City (SA)
(72) Inventor: Al-Rabhi, Mohamed, Houston, 77042 (US); Mamedov, Aghaddin, Sugar Land, 77478 (US); Hegde, Ravi, 562125 Bangalore (IN)
(74) Representative: Modiano, Gabriella Diana

(57) **Abstract**

Disclosed herein are methods of forming a soil amendment, the method comprising: a. providing a carbon dioxide source; b. adsorbing carbon dioxide from the carbon dioxide source with sodium oxide of sodium bentonite clay to form a first sodium carbonate; c. reacting sodium bentonite clay with an olivine magnesium silicate to form magnesium carbonate and sodium silicate; d. reacting the sodium silicate with carbon dioxide to form a second sodium carbonate and silicon dioxide; and e. forming the soil amendment by combining the generated magnesium carbonate and the silicon dioxide, where steps c) and d) continue in a continuous fashion until the olivine magnesium silicate is consumed.

## Description

### FIELD OF DISCLOSURE

The present disclosure relates to the production of soil amendments and nutrients by mineral sequestration of carbon dioxide.

### BACKGROUND

Carbon dioxide (CO₂) emission is a significant global warming concern also affecting growth and production of plants. In nature, the formation of carbonate minerals from atmospheric CO₂, a form of CO₂ mineralization, is one of the major processes in the long-term global carbon cycle. A number of companies are working towards large scale deployment of carbon capture and storage to effectively decarbonize the industry. A primary strategy for CO₂ emission reduction is capture and underground storage in specially prepared halls. Alternatively, the carbon dioxide emissions may be chemically treated, which typically requires a reducing agent that converts the CO₂ to useful chemicals. Other strategies combine CO₂ chemical utilization with storage. For example, CO₂ is mineralized through chemical reactions and the produced mineral is used as a soil enrichment or additive. Mineralization of CO₂, however, is a relatively slow process and, at a large scale, features significant energy costs.

Accordingly, there remains a need in the art for efficient processes that optimize mineralization of CO₂. These and other needs are met by aspects of the present disclosure.

### SUMMARY OF THE DISCLOSURE

Aspects of the disclosure relate to methods of forming a soil amendment through sequestration of carbon dioxide via mineral carbonation. The method comprises (a) adsorbing carbon dioxide from a carbon dioxide source with sodium oxide of sodium bentonite clay to form a first sodium carbonate; (b) reacting sodium bentonite clay with an olivine magnesium silicate to form magnesium carbonate and sodium silicate; (c) reacting the sodium silicate with carbon dioxide to form a second sodium carbonate and silicon dioxide; and (d) forming the soil amendment by combining the generated magnesium carbonate and the silicon dioxide. Steps (c) and (d) proceed in a continuous fashion until the olivine magnesium silicate is consumed.

### BRIEF DESCRIPTION OF THE FIGURES

The accompanying figures, which are incorporated in and constitute a part of this specification, illustrate several aspects and together with the description serve to explain the principles of the disclosure.

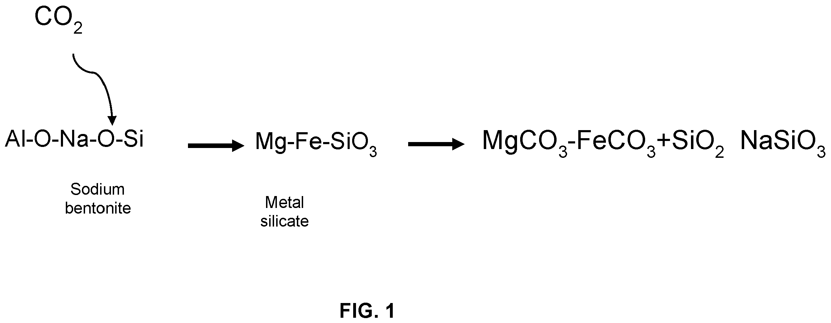

FIG. 1 is a diagram of the reaction between sodium bentonite clay, carbon dioxide, and a metal silicate.

### DETAILED DESCRIPTION

The rising levels of carbon dioxide (CO₂) in the Earth's atmosphere is a growing concern for global warming, which also affects the productivity of plants. Reduction of CO₂ emission has thus become a primary interest of many companies. To address this issue, numerous nations and organizations are developing strategies to lower CO₂ emissions to the atmosphere. The principal approaches under consideration include improving energy efficiency; making greater use of alternative sources of energy; and developing economically viable technologies for capture, separation, and long-term storage of CO₂. Such methods for capture, separation, and storage are generally described as CO₂ sequestration. Some CO₂ sequestration methods may include storage underground or deep in the ocean, natural gas fields, or subterranean cold beds, but also require substantial amounts of energy for collection and disposal or are plagued by reservoir-integrity problems.

An alternative CO₂ sequestration strategy known as "mineral carbonation" or "carbon mineralization" may alleviate these concerns by reacting the carbon dioxide with naturally occurring minerals, such as silicates, to form carbonate minerals, such as calcite (CaCO₃) and magnesite (MgCO₃), which remain stable for an essentially indefinite period of time. Mineral carbonation provides carbonate compounds that are thermodynamically stable, environmentally benign, and weakly soluble in meteoric water. These compounds are useful as soil amendments to reduce acidity and increase moisture content.

Atmospheric carbon can be transformed into carbonate minerals either, as part of an industrial process, or by injection into geological formations where the elements required for carbonate-mineral formation are present. Still, a number of challenges face mineral carbonation processes including overcoming the slow kinetics of mineral-fluid reactions, dealing with the large volume of source material required, and reducing the energy needed to hasten the carbonation process.

Olivine (Mg₂SiO₄), an abundant mineral that is rich in magnesium and silicon, has been the focus of research in carbon mineralization applications. The mineral reacts readily because it is far from equilibrium with the atmosphere and surface waters. Olivine forms the carbonate mineral magnesite via reactions, such as:

Mg₂SiO₄ (olivine) + 2 CO₂ (from gas or fluid) = 2MgCO₃ (magnesite) + SiO₂ (quartz)

Efforts for mineralization of carbon dioxide have also been summarized. Although the formation of stable carbonate phases by reacting CO₂ with silicate minerals is thermodynamically favorable, it is not a straightforward process on an industrial scale. Major challenges to these processes include: the high scale availability of CO₂ at site, the need to accelerate the rate of carbonate formation to make it efficient, and the energy costs. As provided herein, reaction kinetics for carbon dioxide mineralization with olivine as a silicate source may be slow. The process may be further hindered by the limited adsorption of carbon dioxide on olivine, which has a rock structure and is non-porous. Another process proposed for mineral carbonation is the combination of carbon dioxide with fly ash (about 30% CaO and Fe₂O₃), which is the solid residue generated from coal combustion when lime is used to neutralize the gas stream. But, limited supplies of fly ash make this option unfeasible at a large scale.

Conventional approaches to carbon mineralization have been developed. The process for mineralization of CO₂ is relatively slow due to sluggish silicate dissolution rates. Generally, the mineral carbonation requires that injected CO₂ be dissolved into an aqueous solution, which requires large quantities of water. For example, to dissolve one ton of CO₂ at 25 bars partial pressure and 25 °C requires about 27 tons of water. This quantity increases to about 341 tons of water at a CO₂ partial pressure of 2 bars. Injection costs depend on the amount of energy required to pump the CO₂.

Researchers have demonstrated that reaction of calcium silicates has similar reaction performance with carbon dioxide as olivine, as reported in Z. Jin, et. al, Preparation of precipitated calcium carbonate using wollastonite and CO2 from industrial exhaust, Brazilian Journal of Chemical Engineering, 15, 2022. https://doi.org/10.1007/s43153-021-00200-8. Further articles describe the reaction of CO₂ in microwave furnace at a temperature of up to 650 °C. Half-gram quantities of serpentine were reacted in the microwave furnace in an atmosphere of CO₂ gas saturated with water vapor at high temperatures over a range of 375 to 650 °C. Reaction mechanisms of magnesium silicates with carbon dioxide in microwave fields, Final Report to the U.S. Department of Energy, National Energy Technology Laboratory For the Period September 1, 2002 through November 28, 2003.

Researchers also describe the reaction of CO₂ with sodium silicate and demonstrated an adsorption-desorption equilibrium during adsorption of CO₂ that limits full conversion of the sodium silicate reaction. Liptai, R., An experimental study of the effects of additives on the collapsibility of carbon dioxide-sodium silicate bonded foundry cores (1960). Masters Theses. 2676, https://scholarsmine.mst.edu/masters_theses/2676.

Chinese Patent CN 102120588 describes a method of mineral carbonation through an ion-exchange reaction with calcium-based bentonite clay, containing cristobalite.

United States Patent US 7722842B2 discloses a method of mineral sequestration of environmental pollutant gases, such as carbon dioxide, through a reaction in aqueous solution of carbon dioxide with a magnesium mineral.

United States Patent US 8333944B2 describes a process of treating a cement plant flue gas by precipitating a solution of carbonate ions with alkaline-earth metal ions.

United States Patent US 9963351B2 discloses a process carbon dioxide sequestration using magnesium silicate materials that have been converted to magnesium hydroxide.

Processes of the present disclosure provide a method for CO₂ sequestration and transformation to a material that can be stored via CO₂ mineralization. The disclosed processes target CO₂ emission reduction while simultaneously producing useful agriculture products - soil amendments.

### Processes

The disclosed processes target the reduction of carbon dioxide CO₂ emissions while simultaneously producing useful agriculture products. Namely, the disclosed processes may provide useful agriculture products, such as soil amendments comprising magnesium carbonate and silicone dioxide. Aspects of the present disclosure utilize mineralization of a carbon dioxide source to form a soil amendment. In certain aspects, the soil amendment may be formed by mineralizing a carbon dioxide source in the presence of a sodium bentonite activator and a metal silicate source, such as olivine magnesium silicate, to form the soil amendment comprising magnesium carbonate and silicon dioxide.

Without wishing to be bound by any particular theory, the bentonite clay activator may improve activity of the carbon dioxide for reaction with olivine magnesium silicate. The bentonite clay may undergo a solid-state reaction with magnesium silicate of olivine and sodium carbonate which forms during adsorption of carbon dioxide on the sodium oxide component of the bentonite clay. The processes according to aspects of the disclosure provide a yield of magnesium carbonate that is greater than the yield of comparable processes in the absence of bentonite clay. For example, the disclosed processes may provide a yield of magnesium carbonate greater than 85% while a comparable process in the absence of bentonite clay may provide a yield of about 55%.

The disclosed processes may comprise: (a) adsorbing carbon dioxide from a carbon dioxide source with sodium oxide of sodium bentonite clay to form a first sodium carbonate; (b) reacting sodium bentonite clay with an olivine magnesium silicate to form magnesium carbonate and sodium silicate; (c) reacting the sodium silicate with carbon dioxide to form a second sodium carbonate and silicon dioxide; and (d) forming the soil amendment by combining the generated magnesium carbonate and the silicon dioxide.

In various aspects, the disclosed processes comprise the following reaction steps:
a) adsorption of carbon dioxide by sodium oxide of bentonite clay and formation of sodium carbonate by acid-base reaction:

   Na₂O + CO₂ = Na₂CO₃ (1)
b) solid state reaction of bentonite clay with the Mg silicate of olivine:

   MgSiO₃ + Na₂CO₃ = MgCO₃ + Na₂SiO₃ (2)
c) reaction of sodium silicate with carbon dioxide:

   Na₂SiO₃ + CO₂ = Na₂CO₃ + SiO₂ (3)

Reaction steps b) and c) may proceed as continuous reactions until complete consumption of magnesium silicate depending on reaction conditions. The reactions may proceed within elementary steps of the catalytic reaction where sodium is the intermediate. The final product is a mixture of magnesium carbonate (MgCO₃) and silicone dioxide (SiO₂). The product mixture may be useful as soil amendment to regulate acidity of soil, and due to the SiO₂, may further improve soil composition by reducing soil aggregates.

It should be clearly understood that the chemical formulae for the solutes (substances dissolved in aqueous solution or gaseous medium) in Reactions 2 and 3 represent stoichiometric components in aqueous solution, not as aqueous species. This convention was adopted for the sake of generality and simplicity.

To facilitate the reaction of carbon dioxide with olivine magnesium silicate, carbon dioxide is first adsorbed with bentonite clay. In various aspects, carbon dioxide from a suitable carbon dioxide source may be adsorbed with sodium oxide of sodium bentonite clay to form a first sodium carbonate. Aspects of the present disclosure anticipate any suitable carbon dioxide source. The carbon dioxide source may be a gas stream containing carbon dioxide. In some examples, the carbon dioxide source is one or more streams produced as a byproduct of ethylene oxide production, a coke oven gas stream, a byproduct from a steel making plant, byproduct from a cracker reactor flue gas, byproduct from a power plant.

Aspects of the present disclosure utilize bentonite clay as an activator for carbon mineralization of CO₂ with a metal silicate. The main mineral component of bentonite is montmorillonite, a hydrated di-octahedral alumino-silicate. Its general formula can be written as:

(Na,Ca)0.33(Al,Mg)₂(Si₄O₁₀)(OH)₂·nH₂O

Bentonite clay consists primarily of crystalline clay minerals belonging to the smectite group, which are hydrous aluminum silicates containing iron and magnesium as well as either sodium or calcium. Two types of bentonite are recognized, sodium and calcium, and the uses of each depend on specific physical properties. The sodium component of sodium bentonite clay exists in the form of sodium oxide and sodium silicate. According to various aspects, sodium bentonite clay may act as an activator to promote the reactivity between carbon dioxide and olivine magnesium sulfate.

Adsorption of carbon dioxide with the sodium bentonite clay may proceed at particular pressure and temperature conditions. As an example, adsorption may proceed at a pressure greater than atmospheric pressure and at a temperature greater than room temperature.

The sodium bentonite clay may be reacted with a suitable silicate source, particularly a suitable metal silicate feedstock. Many different types of metal-silicate feedstocks are amenable to carbonation by the disclosed processes, including naturally occurring silicates such as those present in rocks and clay-rich formations, as well as silicates present in industrial waste products including fly ash and waste concrete. Typically, the metal silicate feedstock is composed of one or more calcium silicates, magnesium silicates, iron-bearing silicates (such as basalt), or mixtures thereof, although other types of silicates may also be used. In specific aspects, the sodium bentonite clay may react with a naturally occurring olivine magnesium silicate to form magnesium carbonate and sodium silicate.

Sodium silicate is generally very active for capture of CO₂ and the formation of sodium carbonate. However, this adsorption of CO₂ is typically unstable and CO₂ may desorb after a duration of time. Without wishing to be bound by any particular theory, the high activity of the sodium compound of the bentonite clay for carbon dioxide acceptance may be used as an intermediate step for transformation of adsorbed CO₂ to carbonate of two valence metals, such as Mg or Fe as shown in FIG. 1.

The olivine magnesium silicate may have a wide range of initial particle sizes. In some example, the metal silicates used as feedstocks for the process can have a wide range of initial particle sizes. Generally, it is desirable to reduce the particle size of the metal silicate(s) prior to chemical treatment. For example, the particle size of the metal silicate(s) may be reduced to an average diameter of less than about 100 microns. Any suitable equipment may be used to reduce particle size.

In various aspects, the bentonite clay may be present in an amount of 5% to 15% relative to the amount of sodium silicate. The reaction of sodium bentonite clay with olivine magnesium silicate may proceed in an aqueous or gaseous medium.

Aspects further comprise carbonating a metal silicate by reacting the metal silicate and the source of carbon dioxide to provide a carbonate of the metal. As an example, the sodium silicate may react with the carbon dioxide to form a second sodium carbonate and silicon dioxide, which may be combined to form the soil amendment.

Methods of the present disclosure further comprise forming the soil amendment as a coating material for a nutrient to provide a soil amendment complex. As an example, Suitable nutrients may include any of those conventionally used to improve soil performance or composition. Examples of suitable nutrients may include, but are not limited to, nitrogen, phosphorous, potassium, sulfur or a combination thereof.

The coating material comprising the soil amendment may be produced via physical blending of metal carbonate with fertilizer or via direct application of metal carbonate. In some aspects, to form a soil amendment complex, the coating material comprising the soil amendment may be produced via impregnation of a mixture of the generated metal carbonate (such as calcium carbonate) and silicon dioxide by a salt comprising any of the suitable nutrients described herein. The soil amendment complex may be introduced to soil to improve a number of soil properties. In certain aspects, the silicon dioxide of the coating material comprising the soil amendment may further regulate the structure of dense soil giving the necessary porosity to soil to maintain moisture therein. In some aspects, the coating material comprising the soil material may be applied as a coating for any nutrient (such as N, P, K, or S) by impregnation of MgCO₃/SiO₂ binary mixture by any of a N, P, K, S containing salts. The MgCO₃ component of the binary mixture or nutrient containing composition may alleviate the acidity of the soil, while the SiO₂ component of the composition may regulate structure of the dense soil giving the necessary porosity to soil to keep moisture in the layers of the soil.

In some aspects, the disclosed reaction processes may proceed at a reaction temperature between 80 °C and 120 °C and proceed for about 72 hours.

In some aspects, the methods proceed at a reaction pressure of from 5 bar to 40 bar. For example, the method proceeds at a reaction pressure of about 25 bar. The reaction may proceed in a Parr reactor operated in non-continuous mode.

### Systems

Various systems may make use of the integrated processes described herein. In an aspect, a system for sequestering carbon dioxide from a gas stream may comprise a gas stream comprising carbon dioxide, a first reaction chamber and a second reaction chamber. The system may include a gas stream containing carbon dioxide. As an example, a flue gas containing carbon dioxide or a stream of pure carbon dioxide gas may be used.

The first reaction chamber may be configured for adsorbing carbon dioxide with a sodium bentonite clay to form a sodium carbonate and for reacting a metal silicate with the sodium carbonate to produce a sodium metasilicate. The second reaction chamber may be configured for contacting the metal silicate with the gas stream containing the carbon dioxide to produce a carbonate of the metal. The system may include a supply of the metal silicate and carbon dioxide entering the system.

The disclosed reactions may take place in a single reactor bed. Reactions may proceed in a Parr reactor. In certain aspects, the Parr reactor may be operated in non-continuous mode.

Further aspects of the disclosure relate to a system for sequestering carbon dioxide from a gas stream. The system may comprise a gas stream containing carbon dioxide; a first reaction chamber for adsorbing carbon dioxide with a sodium bentonite clay to form a sodium carbonate and for reacting a metal silicate with the sodium carbonate to produce a sodium silicate (metasilicate of the sodium); and a second reaction chamber for contacting the metal silicate with the gas stream containing the carbon dioxide to produce a carbonate of the metal.

### ASPECTS

The disclosed systems and methods include at least the following aspects.

Aspect 1. A method of forming a soil amendment, the method comprising: providing a carbon dioxide source; adsorbing carbon dioxide from the carbon dioxide source with sodium oxide of sodium bentonite clay to form a first sodium carbonate; reacting sodium bentonite clay with an olivine magnesium silicate to form magnesium carbonate and sodium silicate; reacting the sodium silicate with carbon dioxide to form a second sodium carbonate and silicon dioxide; and forming the soil amendment by combining the generated magnesium carbonate and the silicon dioxide where steps c) and d) continue in a continuous fashion until the olivine magnesium silicate is consumed.

Aspect 2. The method of aspect 1, further comprising forming the soil amendment as a coating material for a nutrient.

Aspect 3. The method of aspect 2, wherein the nutrient comprises nitrogen, phosphorous, potassium, sulfur, or a combination thereof.

Aspect 4. The method of any one of aspects 1-3, wherein the bentonite clay is present in an amount of 5 % to 15 % relative to the sodium metal silicate.

Aspect 5. The method of any one of aspects 1-4, wherein the step (c) of reacting the sodium bentonite clay with the olivine magnesium silicate proceeds in an aqueous or gaseous medium.

Aspect 6. The method of any one of aspects 1-5, wherein the step (b) of adsorbing the carbon dioxide with the sodium bentonite clay proceeds at a pressure greater than atmospheric pressure and at a temperature greater than room temperature.

Aspect 7. The method of any one of aspects 1-6, wherein the method proceeds at a reaction temperature between 80 °C and 120 °C.

Aspect 8. The method of any one of aspects 1-7, wherein the method proceeds at a reaction pressure of from 5 bar to 40 bar.

Aspect 9. The method of any one of aspects 1-8, wherein the method proceeds at a reaction pressure of about 25 bar.

Aspect 10. The method of any one of aspects 1-9, wherein reactions proceed in a Parr reactor operated in non-continuous mode.

Aspect 11. The method of any one of aspects 1-10, wherein reactions proceed for 72 hours.

Aspect 12. The method of any one of aspects 1-11, wherein a yield for the magnesium carbonate is greater than 85%.

Aspect 13. The method of any one of aspects 1-12, wherein the carbon dioxide source is one or more streams produced as a byproduct of ethylene oxide production, a coke oven gas stream, a byproduct from a steel making plant, byproduct from a cracker reactor flue gas, byproduct from a power plant.

Aspect 14. A method of forming a soil amendment, the method comprising: mineralizing a carbon dioxide source in the presence of a sodium bentonite activator and olivine to form a soil amendment comprising magnesium carbonate and silicon dioxide.

Aspect 15. The method of aspect 14, further comprising forming the soil amendment as a coating on a suitable nutrient to form a soil amendment complex.

Aspect 16. A system for sequestering carbon dioxide from a gas stream comprising: a gas stream containing carbon dioxide; and a first reaction chamber for adsorbing carbon dioxide with a sodium bentonite clay to form a sodium carbonate and for reacting a metal silicate with the sodium carbonate to produce a sodium metasilicate, and a second reaction chamber for contacting the metal silicate with the gas stream containing the carbon dioxide to produce a carbonate of the metal.

It is to be understood that the terminology used herein is for the purpose of describing particular aspects only and is not intended to be limiting. Although any methods and materials similar or equivalent to those described herein can be used in the practice or testing of the present disclosure, example methods and materials are now described.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; and the number or type of embodiments described in the specification.

Throughout this application, various publications are referenced. The disclosures of these publications in their entireties are hereby incorporated by reference into this application in order to more fully describe the state of the art to which this pertains. The references disclosed are also individually and specifically incorporated by reference herein for the material contained in them that is discussed in the sentence in which the reference is relied upon. Nothing herein is to be construed as an admission that the present disclosure is not entitled to antedate such publication by virtue of prior disclosure. Further, the dates of publication provided herein may be different from the actual publication dates, which can require independent confirmation.

Unless defined otherwise, all technical and scientific terms used herein have the same meaning as commonly understood by one of ordinary skill in the art to which this disclosure belongs. Although any methods and materials similar or equivalent to those described herein can be used in the practice or testing of the present disclosure, example methods and materials are now described.

As used in the specification and the appended claims, the singular forms "a," "an" and "the" include plural referents unless the context clearly dictates otherwise. Thus, for example, reference to "an injector" may include one or more injectors.

Ranges can be expressed herein as from "about" one particular value, and/or to "about" another particular value. When such a range is expressed, another aspect includes from the one particular value and/or to the other particular value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "optional" or "optionally" means that the subsequently described event or circumstance can or cannot occur, and that the description includes instances where said event or circumstance occurs and instances where it does not. For example, the phrase "optionally substituted alkyl" means that the alkyl group can or cannot be substituted and that the description includes both substituted and un-substituted alkyl groups.

Disclosed are the components to be used to prepare the products of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions, and it is understood that there are a variety of structures that can perform the same function that are related to the disclosed structures, and that these structures will typically achieve the same result.

### EXAMPLES

The following examples are provided to illustrate the compositions, processes, and properties of the present disclosure. The examples are merely illustrative and are not intended to limit the disclosure to the materials, conditions, or process parameters set forth therein.

A 100 gram (g) amount of olivine mineral was ground to the size 20-40 mesh and added to a Parr reactor. Then a 10 g amount of bentonite clay mixed with 5 g of water and added to the reactor. Pure carbon dioxide CO₂ was fed into the reactor at a flow rate of 30 cubic centimeters per minute (cc/min, or cm³/min). Pressure was regulated in the Parr reactor using a back pressure regulator at a pressure of 25 bar. Temperature in the reactor was maintained at about 80 °C and the reaction continued for 72 hours. The final product was collected in the form of dry solid material with particles having a size of 20-60 mesh. The reaction material was dried and analyzed using X-ray diffraction analysis (XRD) analysis for Mg silicate content in the final product. The magnesium carbonate content was more than 85%.

As a comparative example, the preceding methods were performed without the incorporation of bentonite clay. The resulting material obtained was dried and analyzed via XRD analysis. For the comparative material prepared in the absence of bentonite clay, magnesium silicate content was much lower at 55%.

It will be apparent to those skilled in the art that various modifications and variations can be made in the present disclosure without departing from the scope or spirit of the disclosure. Other embodiments of the disclosure will be apparent to those skilled in the art from consideration of the specification and practice of the disclosure disclosed herein. It is intended that the specification and examples be considered as exemplary only, with a true scope and spirit of the disclosure being indicated by the following claims.

All cited patents, patent applications, and other references are incorporated herein by reference in their entirety. However, if a term in the present application contradicts or conflicts with a term in the incorporated reference, the term from the present application takes precedence over the conflicting term from the incorporated reference. While typical embodiments have been set forth for the purpose of illustration, the foregoing descriptions should not be deemed to be a limitation on the scope herein. Accordingly, various modifications, adaptations, and alternatives can occur to one skilled in the art without departing from the spirit and scope herein.

## Claims

1. A method of forming a soil amendment, the method comprising:
a. providing a carbon dioxide source;
b. adsorbing carbon dioxide from the carbon dioxide source with sodium oxide of sodium bentonite clay to form a first sodium carbonate;
c. reacting sodium bentonite clay with an olivine magnesium silicate to form magnesium carbonate and sodium silicate;
d. reacting the sodium silicate with carbon dioxide to form a second sodium carbonate and silicon dioxide; and
e. forming the soil amendment by combining the generated magnesium carbonate and the silicon dioxide
where steps c) and d) continue in a continuous fashion until the olivine magnesium silicate is consumed.

2. The method of claim 1, further comprising forming the soil amendment as a coating material for a nutrient.

3. The method of claim 2, wherein the nutrient comprises nitrogen, phosphorous, potassium, sulfur, or a combination thereof.

4. The method of any one of claims 1-3, wherein the bentonite clay is present in an amount of 5 % to 15 % relative to the sodium metal silicate.

5. The method of any one of claims 1-4, wherein the step (c) of reacting the sodium bentonite clay with the olivine magnesium silicate proceeds in an aqueous or gaseous medium.

6. The method of any one of claims 1-5, wherein the step (b) of adsorbing the carbon dioxide with the sodium bentonite clay proceeds at a pressure greater than atmospheric pressure and at a temperature greater than room temperature.

7. The method of any one of claims 1-6, wherein the method proceeds at a reaction temperature between 80 °C and 120 °C.

8. The method of any one of claims 1-7, wherein the method proceeds at a reaction pressure of from 5 bar to 40 bar.

9. The method of any one of claims 1-8, wherein reactions proceed in a Parr reactor operated in non-continuous mode.

10. The method of any one of claims 1-9, wherein reactions proceed for 72 hours.

11. The method of any one of claims 1-10, wherein a yield for the magnesium carbonate is greater than 85%.

12. The method of any one of claims 1-11, wherein the carbon dioxide source is one or more streams produced as a byproduct of ethylene oxide production, a coke oven gas stream, a byproduct from a steel making plant, a byproduct from a cracker reactor flue gas, or a byproduct from a power plant.

13. A method of forming a soil amendment, the method comprising:
mineralizing a carbon dioxide source in the presence of a sodium bentonite activator and olivine to form a soil amendment comprising magnesium carbonate and silicon dioxide.

14. The method of claim 14, further comprising forming the soil amendment as a coating on a suitable nutrient to form a soil amendment complex.

15. A system for sequestering carbon dioxide from a gas stream comprising:
a gas stream containing carbon dioxide; and
a first reaction chamber for adsorbing carbon dioxide with a sodium bentonite clay to form a sodium carbonate and for reacting a metal silicate with the sodium carbonate to produce a sodium metasilicate, and
a second reaction chamber for contacting the metal silicate with the gas stream containing the carbon dioxide to produce a carbonate of the metal.
